# EUROPÄISCHE PATENTSCHRIFT

(11) **EP 3 710 294 B1**
(45) Veröffentlichungstag und Bekanntmachung des Hinweises auf die Patenterteilung: **05.01.2022**
(21) Anmeldenummer: 18826499.8
(22) Anmeldetag: 14.11.2018
(51) Int. Cl.: B60J 10/16, B60J 10/75, B29C 48/16, B29C 48/155, B29C 48/34, B29L 31/00, B29L 31/30

(54) **DICHTUNGSSTRANG MIT THERMOPLAST-KERNTEIL**
SEALING STRAND HAVING A THERMOPLASTIC CORE PART
PROFIL D'ÉTANCHÉITÉ À PARTIE CENTRALE EN THERMOPLASTIQUE

(30) Priorität: 16.11.2017 DE 102017126995
(43) Veröffentlichungstag der Anmeldung: 23.09.2020
(73) Patentinhaber: CQLT SaarGummi Technologies S.à.r.l., 5544 Remich (LU)
(72) Erfinder: ROUX, Sébastien, 76520 St-Aubin-Celloville (FR); MICOUT, Vincent, 66679 Losheim (DE)
(74) Vertreter: Patentanwälte Bernhardt / Wolff Partnerschaft mbB
(86) Internationale Anmeldenummer: PCT/EP2018/000512
(87) Internationale Veröffentlichungsnummer: WO 2019/096436

(56) Entgegenhaltungen:
- JP-A- H0 577 380
- JP-A- 2000 108 807
- JP-A- 2003 181 902

## Beschreibung

Die Erfindung betrifft einen Dichtungsstrang für die Bildung einer Dichtung an einer Fahrzeugkarosserie, insbesondere einer Schachtleiste oder Fensterführung zur Abdichtung einer bewegbaren Fahrzeugfensterscheibe, mit einem Kernteil aus Thermoplastmaterial und einem mit dem Kernteil verbundenen Dichtungsabschnitt aus Elastomermaterial.

Die Erfindung betrifft ferner ein Verfahren zur Herstellung eines solchen Dichtungsstrangs.

Durch Benutzung sind einen solchen Dichtungsstrang umfassende Schachtleisten bekannt, deren V- oder U-förmiger Kernteil aus Polypropylen (PP) und deren lippenförmiger Dichtungsabschnitt aus einem thermoplastischen Elastomer (TPE) besteht.

Die Herstellung solcher Dichtungsstränge erfolgt in einem einzigen Extrusionsschritt, bei dem der Dichtungsabschnitt mit dem Kernteil mitextrudiert wird. Bekanntermaßen bedarf ein mitextrudierter Dichtungsabschnitt aus einem thermoplastischen stoff- oder/und formschlüssiger Elastomer keiner anschließenden Vulkanisierung.

Aus JP 2003 181902 A, JP 2000 108807 A und JP H05 77380 A sind verschiedene Verfahren zur stoff- oder formschlüssigen Verbindung einer vulkanisierten Gummidichtung mit einem thermoplastischen Material, beispielsweise einem Halteelement, bekannt.

Durch die Erfindung wird ein neuer Dichtungsstrang der eingangs genannten Art geschaffen, der dadurch gekennzeichnet ist, dass der extrudierte Dichtungsabschnitt aus vulkanisiertem Elastomermaterial besteht und dass ein mit dem übrigen Kernteil verbundener Kernteilabschnitt unter stoff- oder/und formschlüssiger Anbindung an den vulkanisierten Dichtungsabschnitt anextrudiert ist, wobei sich das Thermoplastmaterial des übrigen Kernteils und das Thermoplastmaterial des Kernteilabschntits in einem Füllmaterial unterscheiden.

Erfindungsgemäß wird zuerst der Dichtungsabschnitt extrudiert und nach dessen Vulkanisation im Zuge einer separaten Extrusion des Kernteilabschnitts der Dichtungsabschnitt stoff- und/oder formschlüssig mit dem Kernteil bzw. Kernteilabschnitt verbunden, wobei der vulkanisierte Dichtungsabschnitt vor der Verbindung mit dem Kernteil geschrumpft wird und der übrige Kernteil an den Kernteilabschnitt anextrudiert oder angespritzt wird.

Vorteilhaft wird durch die Erfindung ein Dichtungsstrang mit einem Kernteil aus Thermoplastmaterial geschaffen, dessen Dichtungsabschnitt aus vulkanisiertem Elastomermaterial, vorzugsweise EPDM, besteht, so dass er eine gegenüber Dichtungsabschnitten aus TPE verbesserte Standzeit und Dichtwirkung aufweist. Indem erfindungsgemäß die Extrusion des Kernteils bzw. Kernteilabschnitts erst nach der Vulkanisation des Dichtungsabschnitts erfolgt, sind Beeinträchtigungen des Kernteils bzw. Kernteilabschnitts durch Einwirkung von Vulkanisationswärme vermieden. Vorteilhaft wird der Schrumpfungsgrad so gewählt wird, dass die noch verbleibende Restschrumpfung des Dichtungsabschnitts an die Schrumpfung des Kernteils nach dessen Extrusion angeglichen ist. Beeinträchtigungen der Form des extrudierten Verbundteils durch unterschiedliche Schrumpfung seiner Komponenten sind so vermieden.

Der Kernteilabschnitt kann aus dem gleichen Material wie der übrige Kernteil bestehen, wobei sich das Thermoplastmaterial des übrigen Kernteils und das Thermoplastmaterial des Kernteilabschntits z.B. nur in dem Füllmaterial unterscheiden.

In einer Ausführungsform der Erfindung weist der übrige Kernteil eine verstärkende Glasfaserfüllung und der Kernteilabschnitt eine Talkumfüllung auf.

In einer besonders bevorzugten Ausführungsform der Erfindung ist der Dichtungsabschnitt mit dem Kernteil oder dem Kernteilabschnitt über eine mit dem Dichtungsabschnitt mitextrudierte Folie verbunden. Vorteilhaft lässt sich über diese Folie bei der Extrusion des Kernteils eine feste Verschweißung zwischen dem Dichtungsabschnitt und dem Kernteil bzw. dem Kernteilabschnitt herstellen, z.B. durch Ultraschallschweißen. Wegen der geringen Dicke der Folie fließt bei der Vulkanisation zugeführte Wärme schnell in das Material des Dichtungsabschnitts ab, so dass die Folie aus Thermoplastmaterial während der Vulkanisation formbeständig bleibt. Vorzugsweise besteht die Folie aus dem gleichen Material wie der übrige Kernteil oder der Kernteilabschnitt.

Die Dicke der Folie liegt vorzugsweise zwischen 0,010 und 0,500 mm.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: eine Schachtleiste zur Abdichtung einer Fahrzeugfensterscheibe, die einen erfindungsgemäßen Dichtungsstrang umfasst,
- Fig. 2: eine die Herstellung des Dichtungsstrangs von Fig. 1 erläuternde Darstellung, und
- Fig. 3: ein weiteres Ausführungsbeispiel für einen Dichtungsstrang nicht erfindungsgemäß.

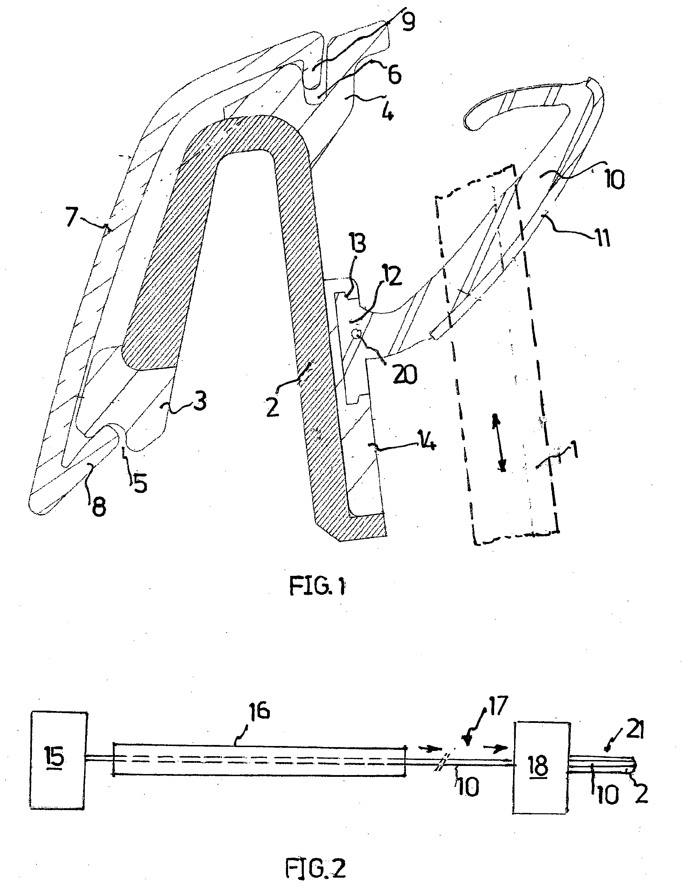

Eine in Fig. 1 im Querschnitt dargestellte Schachtleiste zur Abdichtung einer bewegbaren Fahrzeugfensterscheibe am Eingang zu einem (nicht gezeigten) Fensterschacht umfasst einen extrudierten Kernteilabschnitt 2 aus einem Thermoplastmaterial, in dem gezeigten Beispiel aus glasfaserverstärktem Polypropylen (PP). Über den V- oder U-förmigen Kernteilabschnitt 2 ist die Schachtleiste auf einen an den Fensterschacht grenzenden Karosserieflansch (nicht gezeigt) aufsteckbar.

Mit dem Kernteilabschnitt 2 verbunden sind Ansätze 3 und 4 aus einem thermoplastischen Elastomer (TPE). Die Ansätze 3,4 weisen jeweils eine Rille 5 bzw. 6 für die Aufnahme einer Abwinklung 8 bzw. 9 einer Zierleiste 7 auf, wobei die Zierleiste 7 in den Rillen 5,6 formschlüssig gehalten ist und die Zierleiste 7 aus Metall oder Kunststoff besteht.

An einem der Zierleiste 7 abgewandten Schenkel des Kernteilabschnitts 2 ist der Kernteilabschnitt 2 mit einer Dichtungslippe 10 aus vulkanisiertem Elastomermaterial, in dem gezeigten Beispiel EPDM, verbunden. Auf ihrer der Fahrzeugfensterscheibe 1 zugewandten Seite weist die Dichtungslippe 10 eine Beflockungsschicht 11 auf.

In dem Beispiel von Fig. 1 greift die Dichtungslippe 10 mit einem Fußteil 12 in eine Ausnehmung 13 in einem den Kernteilabschnitt 2 mit der Dichtungslippe 10 verbindenden, einen Ansatz bildenden Kernteilabschnitt 14 ein. Der Kernteilabschnitt 14 besteht wie der Kernteilabschnitt 2 in dem gezeigten Beispiel aus Polypropylen (PP), enthält im Unterschied zu dem Kernteilabschnitt 2 aber keine Glasfaserverstärkung sondern eine Talkumfüllung. In den Fußteil 12 ist ein Glasfaserfaden 20 eingebettet.

Bei der Herstellung der in Fig. 1 gezeigten Schachtleiste wird mit Hilfe einer ersten Extrusionseinrichtung 15 zunächst nur die Dichtungslippe 10 aus EPDM-Material extrudiert und in einer nachgeschalteten Vulkanisationseinrichtung 16 einer Wärmebehandlung unterzogen.

Nach der Vulkanisation erfolgt bei 17, ggf. während einer Unterbrechung der laufenden Strangfertigung, eine Abkühlung und Schrumpfung der extrudierten Dichtungslippe 10, bevor diese dann einer zweiten Extrusionseinrichtung 18 zugeführt wird, wo sie einen Teil der Formwand des Extrusionswerkzeugs bildet.

In der zweiten Extrusionseinrichtung 18 erfolgt die Extrusion des Kernteils 2 unter Mitextrusion der Ansätze 3 und 4 sowie des Kernteilabschnitts 14. Dabei kommt es zur Verbindung des Kernteilabschnitts 14 mit der Dichtungslippe 10, wobei zu dieser Verbindung sowohl ein Stoffschluss zwischen dem Kernteilabschnitt 14 und der Dichtungslippe 10 als auch ein Formschluss des Fußteils 12 in der Ausnehmung 13 beiträgt.

Der Schrumpfungsgrad der Dichtungslippe 10 vor dem Eintritt in die zweite Extrusionseinrichtung 18 ist so bemessen, dass die Restschrumpfung der Dichtungslippe 10 mit der Gesamtschrumpfung des in der zweiten Extrusionseinrichtung 18 hergestellten Extrudats 21 übereinstimmt.

Bei dem Extrudat 21 kann es sich auch nur um den Kernteilabschnitt 14 handeln, an den dann in einem dritten Extrusionsabschritt der übrige Kernteil, d.h. der Kernteilabschnitt 2, anextrudiert wird. Der Kernteilabschnitt 2 könnte an den Kernteilabschnitt 14 auch angespritzt werden.

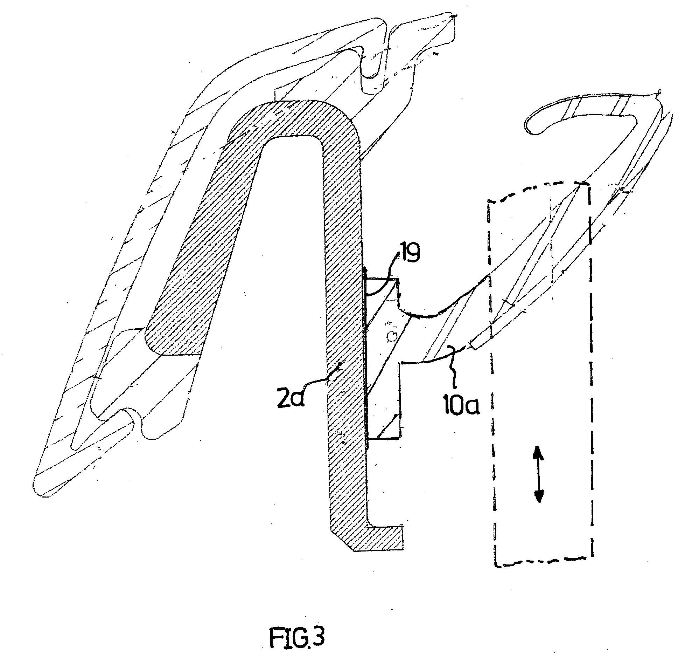

Ein in Fig. 3 gezeigtes Ausführungsbeispiel einer Schachtleiste unterscheidet sich von der Schachtleiste von Fig. 1 dadurch, dass eine Verbindung zwischen einem Kernteil 2a und einer Dichtungslippe 10a über eine dünne Folie 19 hergestellt ist. Die Folie 19 besteht aus einem Thermoplastmaterial, vorzugsweise dem Thermoplastmaterial des Kernteils 2a. Ihre Dicke beträgt in dem gezeigten Beispiel 0,020 mm.

Die Folie 19 wird bereits im Zuge der Extrusion der Dichtungslippe 10a mitextrudiert. Aufgrund ihrer geringen Dicke fließt bei der anschließenden Vulkanisation zugeführte Wärme schnell in das Elastomermaterial der anliegenden Dichtungslippe ab, so dass die Folie 19 während der Vulkanisation formbeständig bleibt.

Bei der Verbindung der Dichtungslippe 10a mit dem Kernteil 2a im zweiten Extrusionsschritt sorgt die Folie 19 für eine feste Verschweißung der Dichtungslippe 10a mit dem Kernteil 2a.

## Patentansprüche

1. Dichtungsstrang für die Bildung einer Dichtung an einer Fahrzeugkarosserie, insbesondere einer Schachtleiste oder Fensterführung zur Abdichtung einer bewegbaren Fahrzeugfensterscheibe (1), mit einem Kernteil (2) aus Thermoplastmaterial und einem extrudierten, mit dem Kernteil (2,14;2a) verbundenen Dichtungsabschnitt (10), wobei der extrudierte Dichtungsabschnitt (10) aus vulkanisiertem Elastomermaterial besteht,
**dadurch gekennzeichnet,**
**dass** ein mit dem übrigen Kernteil (2) verbundener Kernteilabschnitt (14) unter stoff- und/oder formschlüssiger Anbindung an den vulkanisierten Dichtungsabschnitt (10) anextrudiert ist, wobei sich die Thermoplastmaterialien des Kernteilabschnitts (14) und des übrigen Kernteils (2) durch einen Füllstoff unterscheiden.

2. Dichtungsstrang nach Anspruch 1,
**dadurch gekennzeichnet,**
**dass** der Kernteilabschnitt (14) aus dem gleichen Thermoplastmaterial wie der übrige Kernteil (2) besteht.

3. Dichtungsstrang nach Anspruch 1 oder 2,
**dadurch gekennzeichnet,**
**dass** sich die Thermoplastmaterialien des Kernteilabschnitts (14) und des übrigen Kernteils (2) nur durch den Füllstoff unterscheiden.

4. Dichtungsstrang nach einem der Ansprüche 1 bis 3,
**dadurch gekennzeichnet,**
**dass** der übrige Kernteil (2) eine Glasfaser- und der Kernteilabschnitt (14) eine Talkumfüllung aufweist.

5. Dichtungsstrang nach einem der Ansprüche 1 bis 4,
**dadurch gekennzeichnet,**
**dass** der Dichtungsabschnitt (10a) mit dem Kernteil (2a) oder dem Kernteilabschnitt (14) über eine, vorzugsweise mit dem Dichtungsabschnitt (10) mitextrudierte, Folie (19) verschweißt ist.

6. Dichtungsstrang nach Anspruch 5,
**dadurch gekennzeichnet,**
**dass** die Folie (19) aus dem gleichen Thermoplastmaterial wie der der Kernteil (2) oder der Kernteilabschnitt (14) besteht.

7. Dichtungsstrang nach Anspruch 5 oder 6,
**dadurch gekennzeichnet,**
**dass** die Dicke der Folie (19) zwischen 0,010 und 0,500 mm liegt.

8. Dichtungsstrang nach einem der Ansprüche 1 bis 7,
**dadurch gekennzeichnet,**
**dass** der Kernteil (2) einen V- oder U-förmigen Befestigungsabschnitt zum Aufstecken auf einen Karosserieflansch bildet und der Dichtungsabschnitt durch eine von einem Schenkel des Kernteils (2) abstehende Dichtungslippe (10) gebildet ist.

9. Verfahren zur Herstellung eines extrudierten Dichtungsstrangs für die Bildung einer Dichtung an einer Fahrzeugkarosserie, wobei der Dichtungsstrang einen Kernteil (2) aus Thermoplastmaterial und einen mit dem Kernteil (2) verbundenen Dichtungsabschnitt (10) aus Elastomermaterial aufweist, **dadurch gekennzeichnet,**
**dass** in einem ersten Extrusionsschritt der Dichtungsabschnitt (10) extrudiert und nach einer Vulkanisation im Zuge einer Extrusion des Kernteils (2,14) der vulkanisierte Dichtungsabschnitt (10) stoff- oder/und formschlüssig mit einem mit dem übrigen Kernteil (2) zu verbindenden Kernteilabschnitt (14) verbunden wird, wobei der vulkanisierte Dichtungsabschnitt (10) vor der Verbindung mit dem Kernteilabschnitt (14) geschrumpft wird und der übrige Kernteil (2) an den Kernteilabschnitt (14) anextrudiert oder angespritzt wird.

10. Verfahren nach Anspruch 9,
**dadurch gekennzeichnet,**
**dass** die noch verbleibende Schrumpfung des Dichtungsabschnitts (10) an die Schrumpfung des Kernteils (2) bzw. Kernteilabschnitts (14) nach dessen Extrusion angeglichen ist.

11. Verfahren nach einem der Ansprüche 9 oder 10,
**dadurch gekennzeichnet,**
**dass** die stoff- oder/und formschlüssige Verbindung des vulkanisierten Dichtungsabschnitts (10) mit dem Kernteil (2) über eine mit dem Dichtungsabschnitt (10) mitextrudierte dünne Schicht (19) oder/und einen mit dem Kernteil (2) mitextrudierten Kernteilabschnitt (14) erfolgt.

12. Verfahren nach einem der Ansprüche 9 bis 11,
**dadurch gekennzeichnet,**
**dass** die Extrusion des Kernteils (2) bzw. des Kernteilabschnitts (14) der Extrusion des Dichtungsabschnitts (10) innerhalb einer Extrusionslinie nachgeschaltet ist.

## Claims

1. Sealing strand for forming a seal on a vehicle body, more particularly a channel strip or window guide for sealing a movable vehicle window pane (1), having a core part (2) made of thermoplastic material and having an extruded sealing portion (10) connected to the core part (2;14;2a), the extruded sealing portion (10) consisting of vulcanized elastomer material,
**characterized**
**in that** a core part portion (14) connected to the rest of the core part (2) is extruded, with integrally bonded and/or form-fitting attachment, onto the vulcanized sealing portion (10), where the thermoplastic materials of the core part portion (14) and of the rest of the core part (2) differ in a filler.

2. Sealing strand according to Claim 1,
**characterized**
**in that** the core part portion (14) consists of the same thermoplastic material as the rest of the core part (2).

3. Sealing strand according to Claim 1 or 2, **characterized**
**in that** the thermoplastic materials of the core part portion (14) and of the rest of the core part (2) differ only in the filler.

4. Sealing strand according to any of Claims 1 to 3, **characterized**
**in that** the rest of the core part (2) has a glass fibre filling and the core part portion (14) has a talc filling.

5. Sealing strand according to any of Claims 1 to 4, **characterized**
**in that** the sealing portion (10a) is welded to the core part (2a) or to the core part portion (14) via a film (19) which is preferably coextruded with the sealing portion (10).

6. Sealing strand according to Claim 5,
**characterized**
**in that** the film (19) consists of the same thermoplastic material as that of the core part (2) or of the core part portion (14).

7. Sealing strand according to Claim 5 or 6, **characterized**
**in that** the thickness of the film (19) is between 0.010 and 0.500 mm.

8. Sealing strand according to any of Claims 1 to 7, **characterized**
**in that** the core part (2) forms a V- or U-shaped securement portion for plugged mounting onto a bodywork flange, and the sealing portion is formed by a sealing lip (10) which projects from a leg of the core part (2).

9. Method for producing an extruded sealing strand for forming a seal on a vehicle body, the sealing strand comprising a core part (2) made of thermoplastic material and a sealing portion (10) connected to the core part (2) and made of elastomer material, **characterized**
**in that**, in a first extrusion step, the sealing portion (10) is extruded and after vulcanization as part of an extrusion of the core part (2,14) the vulcanized sealing portion (10) is connected with integral bonding and/or form-fitting to a core part portion (14) which is to be connected to the rest of the core part (2), where the vulcanized sealing portion (10) is shrunk before being connected to the core part portion (14), and the rest of the core part (2) is injection-moulded or extruded onto the core part portion (14).

10. Method according to Claim 9,
**characterized**
**in that** the remaining shrinkage of the sealing portion (10) is matched to the shrinkage of the core part (2) or core part portion (14) after extrusion thereof.

11. Method according to either of Claims 9 and 10, **characterized**
**in that** the integrally bonded and/or form-fitting connection of the vulcanized sealing portion (10) to the core part (2) is accomplished via a thin layer (19), which is coextruded with the sealing portion (10), and/or via a core part portion (14), which is coextruded with the core part (2).

12. Method according to any of Claims 9 to 11, **characterized**
**in that** within an extrusion line the extrusion of the core part (2) or of the core part portion (14) is downstream of the extrusion of the sealing portion (10).

## Revendications

1. Garniture d'étanchéité pour la formation d'un joint d'étanchéité sur une carrosserie de véhicule, en particulier d'une baguette ou d'un guidage de fenêtre pour la fermeture étanche d'une vitre mobile (1) d'un véhicule, présentant une partie centrale (2) en un matériau thermoplastique et une section d'étanchéité (10) extrudée, reliée à la partie centrale (2, 14 ; 2a), la section d'étanchéité (10) extrudée étant constituée d'un matériau élastomère vulcanisé, **caractérisée en ce qu'**une section partielle centrale (14) reliée à la partie centrale (2) résiduelle est extrudée avec une liaison par matière et/ou par complémentarité de forme sur la section d'étanchéité (10) vulcanisée, les matériaux thermoplastiques de la section partielle centrale (14) et de la partie centrale (2) résiduelle se distinguant par une charge.

2. Garniture d'étanchéité selon la revendication 1, **caractérisée en ce que** la section partielle centrale (14) est constituée par le même matériau thermoplastique que celui de la partie centrale (2) résiduelle.

3. Garniture d'étanchéité selon la revendication 1 ou 2, **caractérisée en ce que** les matériaux thermoplastiques de la section partielle centrale (14) et de la partie centrale (2) résiduelle ne se distinguent que par la charge.

4. Garniture d'étanchéité selon l'une quelconque des revendications 1 à 3, **caractérisée en ce que** la partie centrale (2) résiduelle présente une charge de fibre de verre et la section partielle centrale (14) présente une charge de talc.

5. Garniture d'étanchéité selon l'une quelconque des revendications 1 à 4, **caractérisée en ce que** la section d'étanchéité (10a) est soudée avec la partie centrale (2a) ou la section partielle centrale (14) par l'intermédiaire d'une feuille (19), de préférence coextrudée avec la section d'étanchéité (10).

6. Garniture d'étanchéité selon la revendication 5, **caractérisée en ce que** la feuille (19) est constituée par le même matériau thermoplastique que celui de la partie centrale (2) ou de la section partielle centrale (14).

7. Garniture d'étanchéité selon la revendication 5 ou 6, **caractérisée en ce que** l'épaisseur de la feuille (19) est située entre 0,010 et 0,500 mm.

8. Garniture d'étanchéité selon l'une quelconque des revendications 1 à 7, **caractérisée en ce que** la partie centrale (2) forme une section de fixation en forme de V ou U pour le placement sur une bride de carrosserie et la section d'étanchéité est formée par une lèvre d'étanchéité (10) faisant saillie à partir d'une branche de la partie centrale (2).

9. Procédé pour la fabrication d'une garniture d'étanchéité extrudée pour la formation d'un joint d'étanchéité sur une carrosserie du véhicule, la garniture d'étanchéité présentant une partie centrale (2) en un matériau thermoplastique et une section d'étanchéité (10) en un matériau élastomère et reliée à la partie centrale (2), **caractérisé en ce que**, dans une première étape d'extrusion, la section d'étanchéité (10) est extrudée et, après une vulcanisation au cours d'une extrusion de la partie centrale (2, 14), la section d'étanchéité (10) vulcanisée est reliée, par liaison de matière et/ou par complémentarité de forme, à une section partielle centrale (14) à relier à la partie centrale (2) résiduelle, la section d'étanchéité (10) vulcanisée étant rétractée avant la liaison avec la section partielle centrale (14) et la partie centrale (2) résiduelle étant extrudée ou moulée par injection sur la section partielle centrale (14).

10. Procédé selon la revendication 9, **caractérisé en ce que** la rétraction résiduelle de la section d'étanchéité (10) est adaptée à la rétraction de la partie centrale (2) ou de la section partielle centrale (14) après son extrusion.

11. Procédé selon l'une quelconque des revendications 9 ou 10, **caractérisé en ce que** la liaison par matière et/ou par complémentarité de forme de la section d'étanchéité (10) vulcanisée à la partie centrale (2) est réalisée par l'intermédiaire d'une couche mince (19) coextrudée avec la section d'étanchéité (10) et/ou d'une section partielle centrale (14) coextrudée avec la partie centrale (2).

12. Procédé selon l'une quelconque des revendications 9 à 11, **caractérisé en ce que** l'extrusion de la partie centrale (2) ou de la section partielle centrale (14) est disposée en aval de l'extrusion de la section d'étanchéité (10) dans une ligne d'extrusion.
